Europäisches Patentamt

European Patent Office

Office européen des brevets

(19)

(11) **EP 1 176 784 A2**

(12) **EUROPÄISCHE PATENTANMELDUNG**

(43) Veröffentlichungstag:
**30.01.2002 Patentblatt 2002/05**

(51) Int Cl.⁷: **H04L 29/06**, H04L 1/00

(21) Anmeldenummer: **01117543.7**

(22) Anmeldetag: **20.07.2001**

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(30) Priorität: **20.07.2000 DE 10035368**

(71) Anmelder: **adisoft AG
76135 Karlsruhe (DE)**

(72) Erfinder:
• **Borrmann, Rene, Dipl.-Inform.
12209 Berlin (DE)**
• **Hahn, Jörg, Dr.-Ing.
12249 Berlin (DE)**

(74) Vertreter: **Niederkofler, Oswald A. Dipl.-Phys. et al
Samson & Partner Widenmayerstrasse 5
D-80538 München (DE)**

(54) **Vorrichtungen, Computerprogrammprodukt und Verfahren zur Verwaltung einer Datenübertragung**

(57) Die Erfindung betrifft Vorrichtungen (3, 4) und Verfahren sowie ein Computerprogrammprodukt zur Verwaltung der Datenübertragung über eine verbindungsorientierten Datenverbindung, insbesondere eine Funktelefonverbindung. Gemäß einem ersten Aspekt der Erfindung werden zu übertragende Nutzdaten in aufeinanderfolgende Datenpakete (15) umgewandelt, wird die Übertragungsqualität der Datenübertragung während der Übertragung der Nutzdaten erfaßt und die pro Zeiteinheit übertragene Nutzdatenmenge in Abhängigkeit von der erfaßten Übertragungsqualität während der Übertragung der Nutzdaten angepaßt. Gemäß einem zweiten Aspekt der Erfindung werden für die gesamte Datenverbindung charakteristische Identifikationsmerkmale, insbesondere eine Software-Identifikationsnummer ermittelt, eine physikalische Verbindung einer logischen Datenverbindung anhand der ermittelten charakteristischen Identifikationsmerkmale zugeordnet und bestehende logische Datenverbindungen anhand ihrer zugehörigen Identifikationsmerkmale gespeichert.

Fig. 1

EP 1 176 784 A2

**Beschreibung**

Die Erfindung betrifft Vorrichtungen, Verfahren und ein Computerprogrammprodukt zur Verwaltung der Datenübertragung über eine verbindungsorientierte Datenverbindung.

Im Stand der Technik werden Daten z.B. über das Internet übertragen. Der Datenaustausch (beispielsweise zwischen zwei Computern) erfolgt hierbei unter Verwendung von Internetprotokollen, insbesondere gemäß dem sog. Transmission Protocol (TCP) und dem sog. Internet Protocol (IP), kurz TCP/IP. Hierzu ist auf beiden Computern eine Software geladen, die das TCP/IP Protokoll verstehen und auswerten kann (Sokket oder TCP/IP Stack).

Der am schnellsten wachsende Dienst des Internets beruht auf dem Hypertext Transfer Protocol (HTTP) und wird World Wide Web (WWW) genannt. Hierbei werden i.a. einzelne Dokumente, sog. Web-Seiten oder Web-Pages, übertragen. HTTP ist ein Client-Server-Protkoll. Der Benutzer benötigt einen Client (z.B. einen Computer, oder ein (Mobil)telefon), auf dem als Client-Software ein sog. Web-Browser läuft. Der Web-Browser fordert die gewünschte Web-Seite unter Öffnung einer Verbindung von einem Web-Server an, der diese dann an den Web-Browser zurücksendet und die Verbindung zum Browser schließt.

Die Web-Seiten des WWW basieren überwiegend auf der Befehlssprache Hypertext Mark-up Language (HTML). Bei HTML handelt es sich um eine statische Befehlssprache, d.h., daß eine einmal dargestellte Web-Seite nachträglich nicht mehr verändert werden kann. Um hier Abhilfe zu schaffen, sind Lösungen wie dynamic HTML (dHTML) geschaffen worden, die es ermöglichen, einzelne Elemente einer Web-Seite während der Anzeige dynamisch zu verändern. Daneben sind Lösungen wie Common Gateway Interface (CGI) oder Active-Server-Pages (ASP) bekannt, die einen interaktiven Datenaustausch zwischen dem Web-Browser und dem Web-Server erlauben.

Das Internet basiert auf Paketvermittlungstechnik. Die Daten, die über das Internet verschickt werden, werden in einzelne Pakete gepackt, die unabhängig voneinander verschickt werden. I.a. weist ein Paket weniger als 1500 Zeichen auf. Jedes Paket enthält eine vom Sender aus den zu sendenden Daten errechnete Prüfsumme, mit der am Empfangsort festgestellt werden kann, ob Übertragungsfehler aufgetreten sind.

Der Empfänger errechnet aus den empfangenen Daten ebenfalls eine Prüfsumme, die mit der übertragenen Prüfsumme verglichen wird. Falls die Prüfsummen nicht übereinstimmen, wird der Absender um eine erneute Übermittlung des Pakets gebeten.

Die Erfindung hat zur Aufgabe, demgegenüber neuartige Vorrichtungen und Verfahren zur Verwaltung der Datenübertragung sowie ein neuartiges Computerprogrammprodukt bereitzustellen.

Gemäß einem Aspekt der Erfindung erreicht sie dieses und weitere Ziele mit einem Verfahren zum Verwalten der Datenübertragung über eine verbindungsorientierte Datenverbindung, insbesondere eine Funktelefonverbindung, welches die folgenden Schritte umfaßt: Umwandeln von zu übertragenden Nutzdaten in aufeinanderfolgende Datenpakete; Erfassen der Übertragungsqualität der Datenübertragung während der Übertragung der Nutzdaten; und Anpassen der pro Zeiteinheit übertragenen Nutzdatenmenge in Abhängigkeit von der erfaßten Übertragungsqualität während der Übertragung der Nutzdaten.

Gemäß einem zweiten Aspekt der Erfindung erreicht sie dieses durch ein Verfahren zum Übertragen von Daten über eine physikalische verbindungsorientierte Datenverbindung, insbesondere eine Funktelefonverbindung, welches folgende Schritte umfaßt: Ermitteln von für die gesamte Datenverbindung charakteristischen Identifikationsmerkmalen, insbesondere einer Software-Identifikationsnummer; Zuordnen einer physikalischen Verbindung zu einer logischen Datenverbindung anhand der ermittelten charakteristischen Identifikationsmerkmale; und Speichern von bestehenden logischen Datenverbindungen anhand ihrer zugehörigen Identifikationsmerkmale.

Außerdem wird das o.g. und weitere Ziele erfindungsgemäß dadurch erreicht, daß entsprechende Vorrichtungen und ein Computerprogrammprodukt zur Verfügung gestellt werden, welches Befehlscode-Abschnitte umfaßt, durch die die Durchführung des o.g. Verfahrens veranlaßt wird, wenn das Computerprogramm auf einem Endgerät, insbesondere einem Computer und/oder einem Telefon läuft.

Zu dem in den Ansprüchen verwendeten Begriff "Computerprogrammprodukt" sei erwähnt, daß hierunter ein Computerprogramm oder ein Computerprogramm-Modul zu verstehen ist, welches durch Speicherung (z.B. auf einem magnetischen Speichermedium oder in einem flüchtigen oder nicht-flüchtigen Halbleiterspeicher der o.g. Vorrichtung, insbesondere eines Computers und/oder eines Telefons) oder durch Signale, die über ein Netzwerk, insbesondere das Internet, versendet werden, verkörpert ist. Dabei braucht das Computerprogramm nicht in einer unmittelbar ausführbaren Form vorliegen, vielmehr kann es auch in einer für die Installation auf dem Computer und/oder dem Telefon vorbereiteten Form vorliegen, wobei es selbstverständlich gepackt, verschlüsselt, für eine etwaige Versendung über ein Netzwerk in Pakete zerteilt und mit übertragungsbezogenen Headern versehen sein kann, etc.

Vorteilhafte Weiterbildungen der Erfindung sind in den Unteransprüchen genannt.

Beim ersten Aspekt der Erfindung kann die Übertragungsqualität z.B. dadurch erfaßt werden, daß von einem die Datenpakete erhaltenden Empfänger, z. B. einem Server- (oder alternativ einem Client-) Rechner, Bestätigungssignale an die Vorrichtung, insbesondere einen Client- (oder alternativ einem Server-) Rechner, gesendet werden. Vorteilhaft bestätigt der Empfänger separat für jedes einzelne Datenpaket, oder für eine bestimmte Anzahl an Datenpaketen dessen bzw. Deren korrekte Ankunft. Diese kann der Empfänger z.B. auf herkömmliche Weise durch Auswerten von im Datenpaket enthaltenen Prüfsummenbits ermitteln. Statt mit einem Bestätigungssignal kann ein nicht korrekt empfangenes Datenpaket alternativ z.B. auch durch Senden eines Fehlersignals angezeigt werden. Vorteilhaft enthält das Bestätigungssignal (bzw. das Fehlersignal) eine das zugehörige Datenpaket kennzeichnende Bitfolge.

Die Übertragungsqualität wird vorzugsweise anhand des Verhältnisses zwischen der Anzahl ausgesendeter und der Anzahl als korrekt bestätigter bzw. Empfängerseitig fehlerfrei empfangener Datenpakete ermittelt. Eine "schlechte" Übertragungsqualität liegt vor, wenn dieses Verhältnis einen vorgegebenen Sollwert unterschreitet. Alternativ kann die Übertragungsqualität bereits dann als "schlecht" eingestuft werden, wenn ein einziges Datenpaket nicht korrekt ankommt.

Vorteilhaft wird dann, wenn eine "schlechte" Übertragungsqualität ermittelt wird, die pro Zeiteinheit übertragene Nutzdatenmenge verringert. Dies geschieht vorzugsweise dadurch, daß die Datenpaketlänge verkleinert, und dabei die Menge der in einem Datenpaket enthaltenen Nutzdaten verringert wird. Hierbei bleibt vorteilhaft die in jedem Datenpaket enthaltene Steuerdatenmenge konstant.

Alternativ ist z.B. denkbar, die Datenpaketlänge gleich zu lassen, und stattdessen die darin enthaltene Nutzdatenmenge zu verringern - z.B. durch redundante Übertragung von Datenbits.

Vorteilhaft werden im Falle eines Paketverlust bzw. eines nicht korrekt übertragenen Pakets - im Gegensatz zum TCP/IP-Protokollnicht ab dem verlorengegangenen bzw. dem nicht korrekt übertragenen Paket sämtliche Pakete erneut versandt. Stattdessen wird genau ermittelt, welche Pakete erfolgreich versandt wurden, und welche nicht. Nur die nicht erfolgreich versandten Pakete werden erneut übertragen.

Besonders bevorzugt wird die Erfindung softwaremäßig verwirklicht. Dabei ist vorteilhaft sowohl auf dem Client- als auch auf dem Serverrechner eine spezielle Software installiert, die Befehlscodeabschnitte umfaßt, welche Funktionsaufrufe einer TCP/IP Socket Schnittstelle, z.B. einer Windows Socket Schnittstelle (oder alternativ einer beliebigen anderen Internetschnittstelle) derart abbilden, daß die o.g. Verfahren durchgeführt werden. Mit anderen Worten wird die Schnittstelle des TCP/IP-Protokolls von der erfindungsgemäßen Software in ein die o.g. Verfahrensschritte bewirkendes, originäres Protokoll übersetzt. Durch den Einsatz der TCP/IP-Schnittstelle kann eine Vielzahl von Client/Server-Anwendungen unterstützt werden, ohne daß bei der erfindungsgemäßen Software spezielle Anpassungen notwendig wären.

Die erfindungsgemäße Datenübertragung läuft vorteilhaft wie folgt ab: Sollen von einem herkömmlichen, auf dem Client (bzw. dem Server) geladenen Softwareprogramm aus Daten an den Server (bzw. den Client) übertragen werden, ruft dieses wie üblich die (TCP/IP)-Internetschnittstelle (d.h. ein entsprechendes Softwareprogramm) auf. Die erfindungsgemäße Client- (bzw. Server-) Software erkennt, daß Daten an einen speziellen Server (bzw. Client) übertragen werden sollen, auf dem die korrespondierende, erfindungsgemäße Server- (bzw. Client-) Software installiert ist - beispielsweise über dessen Internetadresse, Telefonnummer, etc. In diesem Fall bewirkt das erfindungsgemäße Programm die erwähnte Abbildung der Aufrufe der TCP/IP Socket Schnittstelle, so daß die o.g. Verfahrensschritte bewirkt werden, z.B. durch entsprechendes Ansteuern eines Modems.

Bevorzugt wird die Datenübertragung gemäß den beiden erfindungsgemäßen Aspekten verwaltet. Dies bedeutet, daß für eine bestehende physikalische Datenverbindung die pro Zeiteinheit übertragene Nutzdatenmenge von der Übertragungsqualität während der Übertragung der Nutzdaten angepaßt wird und beispielsweise nach einem (gewollten oder ungewollten) Abbruch einer physikalischen Datenverbindung und nach Aufbau einer neuen physikalischen Datenverbindung anhand der dann ermittelten charakteristischen Größen der neuen Datenverbindung eine Zuordnung zu einer noch bestehenden logischen Datenverbindung (ein noch laufendes bzw. mit dem Netzwerk in Verbindung stehendes Anwendungsprogramm, z.B. der noch laufende Web-Browser auf einem Client-Rechner, etc.) gesucht wird. Hierzu wird bevorzugt nach einem Verbindungsabbruch der korrespondierende Server (bzw. der Client) automatisch neu angewählt. Dieser erkennt z.B. an der Seriennummer der Client- (bzw. der Server-) Software, der Rufnummer z.B. des Mobilfunkgeräts, oder dessen IMEI-Nummer (Mobilfunkgeräte-kennummer), daß es sich um die Wiederaufnahme einer logischen Datenverbindung nach einem Abbruch der zugrunde liegenden physikalischen Datenverbindung handelt. Für die neue, ggf. einer bestehenden logischen Datenverbindung zugeordnete physikalische Datenverbindung wird dann wiederum die Nutzdatenmenge/Zeiteinheit abhängig von der Übertragungsqualität angepaßt. Bevorzugt werden für die neue physikalische Datenverbindung bzw. nach einem - gewollten oder ungewollten - Verbindungsabbruch nur noch solche Datenpakete der logischen Datenverbindung übertragen, die während der vorhergehenden physikalischen Datenverbindung noch nicht als fehlerfrei empfangen bestätigt waren. Grundsätzlich kann hierbei das Auftreten eines Verbindungsabbruchs der physikalischen Datenverbindung (z.B. bei einer Telefonverbindung) durch Detektieren des dann von der Vorrichtung, insbesondere dem Client- bzw. Serverrechner empfangenen Besetztzeichens bzw. eines Netzwerkstatus ermittelt werden.

Besonders vorteilhaft wird die physikalische Datenverbindung bei schlechter Übertragungsqualität automatisch abgebrochen, und dann automatisch wieder aufgebaut. Das Abbrechen der Verbindung kann z. B. dadurch erreicht werden, daß das Modem veranlaßt wird, ein entsprechendes Telefonverbindungs-Endzeichen an den korrespondierenden Client bzw. Server zu senden. Daraufhin wird die Verbindung erneut aufgebaut - z.B. durch Senden der dem Telefonanschluß des Servers bzw. des Clients entsprechenden Telefonverbindungs-Wahlzeichen (d.h. durch Wählen der Telefonnummer des Servers bzw. des Clients). Insbesondere bei Funktelefonverbindungen ist nach erneuter Anwahl die Übertragungsqualität häufig stark verbessert.

Bevorzugt sind die erfindungsgemäßen Vorrichtungen für die Verwaltung der Datenübertragung bei einem Mobiltelefon und/oder einem tragbaren Rechner ausgestaltet, auf welchem die erfindungsgemäße Software installiert ist.

Besonders vorteilhaft wird bei der Erfindung dann, wenn eine vorbestimmte Zeitdauer lang (z.B. 1 Minute, 30 Sekunden oder 10 Sekunden lang) keine zu übertragenden Daten vorliegen, die Verbindung automatisch abgebrochen - etwa durch Senden eines Telefonverbindungs-Endezeichens.

Bevorzugt wird die Verbindung, wenn diese laut TCP/IP-Protokoll eigentlich zu schließen wäre, dennoch eine vorbestimmte Zeitdauer lang (z.B. 1 Minute, 30 Sekunden oder 10 Sekunden lang) aufrechterhalten. Hierdurch werden überflüssige Anwahlvorgänge vermieden.

Im folgenden wird die Erfindung anhand von Ausführungsbeispielen und der beiliegenden Zeichnung näher erläutert.

In der Zeichnung zeigen:

Fig. 1     eine schematische Darstellung der Protokollschichten des erfindungsgemäßen Programmsystems;

Fig. 2     eine schematische Darstellung der Kommunikation zwischen Prozessen der Clientkomponente von Fig. 1;.

Fig. 3     eine schematische Darstellung von beim RTP Protokoll von Fig. 1 auftretenden Zuständen;

Fig. 4     eine schematische Darstellung von Sub-Zuständen des in Fig. 3 gezeigten IDLE-Zustands;

Fig. 5     eine schematische Darstellung von Sub-Zuständen des in Fig. 3 gezeigten CONNECTING-Zustands;

Fig. 6     eine schematische Darstellung von Sub-Zuständen des in Fig. 3 gezeigten CONNECTED-Zustands;

Fig. 7     eine schematische Darstellung von Sub-Zuständen des in Fig. 6 gezeigten FLOW-STOPPED-Zustands;

Fig. 8     eine schematische Darstellung von Sub-Zuständen des in Fig. 3 gezeigten DISCONNECTING-Zustands;

Fig. 9     eine schematische Darstellung eines erfindungsgemäßen Datenpakets;

Fig. 10     eine schematische Darstellung eines Abschnitts des in Fig. 9 gezeigten Datenpakets;

Fig. 11     eine schematische Darstellung des Datenteils eines zu Beginn einer Verbindung gesendeten Datenpakets.

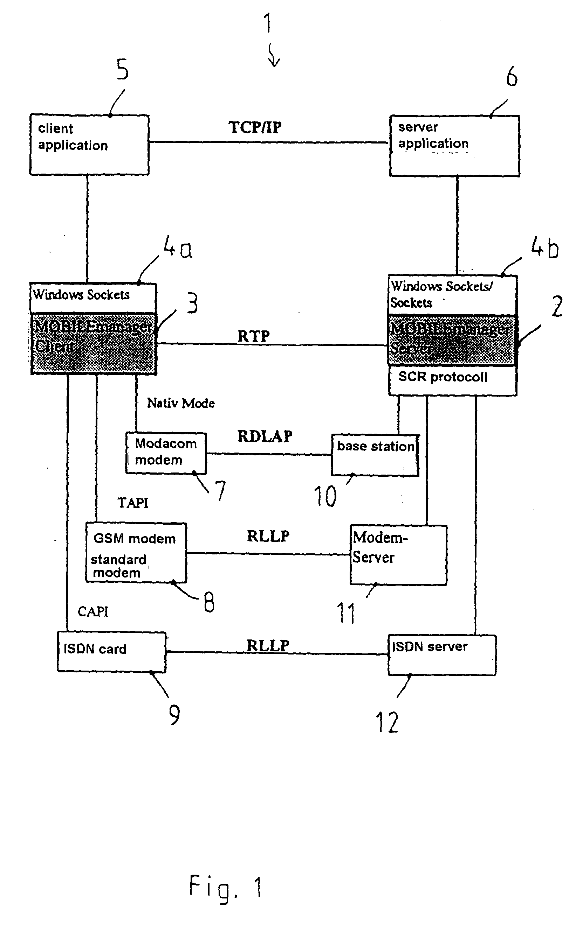

Fig. 1 zeigt eine schematische Darstellung der Protokollschichten des erfindungsgemäßen Programmsystems 1 (MOBILEmanager). Das Programmsystem 1 stellt eine Windows Socket 4a, 4b basierte Umgebung für Client/Server Anwendungen 5, 6 dar. Diese Umgebung ist für die Nutzung von Mobilfunkdiensten wie z.B. Modacom, GSM oder UMTS ausgerichtet.

Das Programmsystem 1 besteht aus einer Serverkomponente 2 und einer Clientkomponente 3. Diese stellen für Client/Serveranwendungen 5, 6 eine Kommunikationsschnittstelle auf Basis von Windows Sockets 4a, 4b zur Verfügung. Hierdurch kann eine Vielzahl gängiger Client/Serveranwendungen 5, 6 unterstützt werden, ohne daß Anpassungen nötig sind.

Mit der Clientkomponente 3 des erfindungsgemäßen Programmsystems 1 werden Funktionsaufrufe der Socket Schnittstelle 4a auf ein mobiles Medium (Datenfunk) abgebildet. Hierzu wird von der Clientkomponente 3 ein Modem, z.B. ein Modacom-Modem 7 (oder ein GSM-Modem 8, oder eine ISDN-Karte 9) angesteuert. Dieses überträgt die Daten an eine zugeordnete Basisstation 10 (oder an einen Modemserver 11, oder an einen ISDN-Server 12). Die Client/Serveranwendung 5, 6 hat keine Kenntnis vom jeweiligen Übertragungsmedium. Durch die Serverkomponente 2 werden die von der Basisstation 10 (oder von dem Modemserver 11, oder von dem ISDN-Server 12) als Protokolleinheiten empfangenen Daten wieder auf Socket Funktionen 4b abgebildet. Die Serveranwendung 6 und die Serverkomponente 2 befinden sich üblicherweise in einer LAN-Umgebung, in die dann die TCP-Verbindungen der Clientanwendungen 5 durchgeschaltet werden.

Die Clientkomponente 3 des erfindungsgemäßen Programmsystems 1 besteht aus den folgenden Prozessen/Modulen:

- MOBILEmanager.exe
- MOBILEmanager.dll

Der Prozeß MOBILEmanager.exe realisiert die folgenden Aktivitäten:

- Verwaltung des Service Provider Interfaces (Aktivierung/ Deakti-vierung von MOBILEmanager.dll)
- Steuerung der Tracelevelaktivitäten
- Profilcheck und Profilselektion
- TAPI-Check und TAPI-Selektion
- Auslösen einer anwendungsunabhängigen Anwahl
- Handling der RTP und RLLP Protokolle

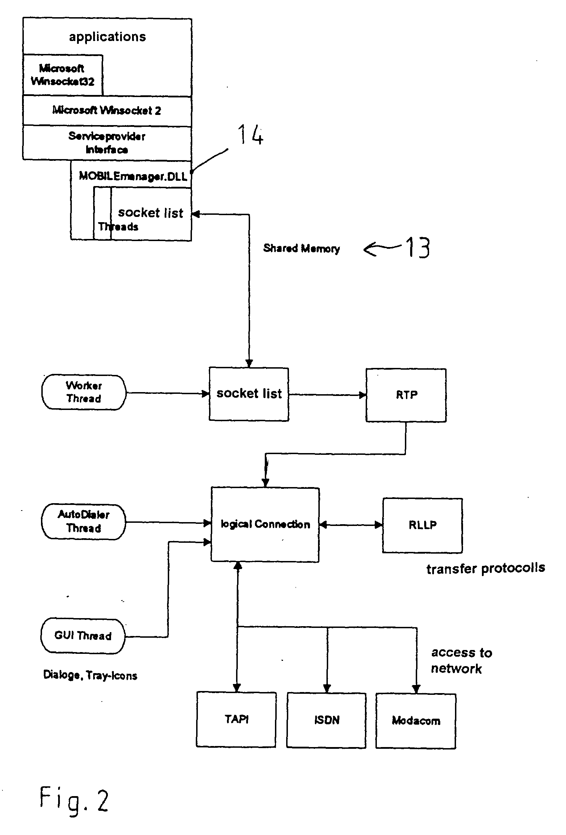

Der Prozeß MOBILEmanager.dll realisiert sämtliche API-Funktionen des Winsock 2.0 Service Provider Interface. Die Kommunikation zwischen den Prozessen MOBILEmanager.dll 14 und MOBILEmanager. exe erfolgt, wie in Fig. 2 gezeigt, über Shared Memory 13.
Der Prozeß MOBILEmanager.dll 14 weist die folgenden Untermodule auf:

- Socketinterface
    Dieses Modul stellt alle in Windows Sockets 4a spezifizierten Funktionsaufrufe zur Verfügung. Alle Funktionen arbeiten nur auf einem Satz von internen Kontrollstrukturen, sodaß es den Clientanwendungen 5 nicht möglich ist, direkt auf die Hardware zuzugreifen.

- Prozeßverwaltung
    Unter dem Multitasking Betriebssystem Windows 95 besteht die Möglichkeit, daß mehrere Clientanwendungen 5 parallel das erfindungsgemäße Programmsystem 1 nutzen. Mit dem Prozeßverwaltungsmodul werden unterschiedliche Prozesse von Clientanwendungen 5 unterschieden, damit z.B. empfangene Daten dem richtigen Prozeß zugeordnet werden können.

- Automatensteuerung
    Dieses Modul stellt für die Modem-, ISDN- und Modacom-Dienste jeweils einen Automaten bereit. Damit werden die physikalischen Verbindungszustände wie aufgebaute Verbindung, abgebrochene Verbindung, etc. gesteuert.

- Socketverwaltung
    Dieses Modul stellt alle Funktionen für die Verwaltung der einzelnen Socketzustände bereit. Hier erfolgt auch die Datenzuordnung und Realisierung des RTP Protokolls.

- Ausgangsbuffersteuerung
    In diesem Modul erfolgt die Steuerung der Sendedaten und der Empfangsdatenschlange.

- Modeminterfacesteuerung
    Hier erfolgt die Umsetzung der Modem-Automatenzustände ins RLLP-Protokoll.

- ISDN-Interfacesteuerung
    Hier erfolgt die Umsetzung der ISDN-Automatenzustände ins RLLP-Protokoll.

- COM-Interfacesteuerung
    Dieses Modul gewährleistet eine einheitliche Schnittstelle zur Modeminterfacesteuerung unabhängig vom gewählten Schnittstelleninterface (TAPI- oder COM-Port).

- TAPI-Interface
    Dieses Modul realisiert die folgenden Funktionen: Anmeldung bei der TAPI/Initialisierung; Prüfen, ob ein TSP mit den geforderten Eigenschaften vorhanden ist; Verbindung herstellen; Daten über den selektierten TSP senden und empfangen; Erkennen, wenn kein Träger vorhanden bzw. die Verbindung unterbrochen ist; Verbindung aktiv beenden; Abmelden bei der TAPI.

- COM-Direkt Interface
    Dieses Modul stellt die notwendige Funktionalität für die Kommunikation mit dem direkten COM-Port zur Verfügung.

- RTP Protokoll Modul
    In diesem Modul findet die eigentliche Abbildung der Windows Socket Funktionen auf Protokolldaten und umgekehrt statt. Das RTP Protokoll ist speziell auf die Realisierung von TCP Verbindungen über Datenfunk zugeschnitten.

- Modemansteuerung
    Das Modemansteuerungsmodul besteht aus zwei Untermodulen. Mit dem ersten wird das Modem, u.a. ein GSM-Modem und ein Motorola Data-TAC Modem, so angesteuert, daß dieses Daten sendet bzw. empfängt. Bei der Ansteuerung des Modems werden Fehlersituationen erkannt, und intelligent auf diese reagiert.

- RLLP-Protokoll

Das RLLP- (Radio Link Level-) Protokoll realisiert die Fehlererkennung und ggf. -korrektur bei der Datenübertragung in Funknetzen.
Die Serverkomponente 2 des erfindungsgemäßen Programmsystems wird unter den Betriebssystemen Linux, UNIX oder Windows NT eingesetzt. Sie besteht aus den folgenden Prozessen:

- Scrdaemon
- Scrproc

Der Prozeß Scrdaemon stellt den Kernprozeß dar. Er verwaltet sämtliche TCP Verbindungen von sämtlichen angeschlossenen Modems, unabhängig davon, ob GSM, ISDN oder Modacom als Dienst eingesetzt wird. Zur Steuerung der Modems wird das Protokoll SCR (Standard Context Routing) verwendet. Dabei ist der Prozeß Scrdaemon über das Protokoll X.25 (DATEX-P) mit dem jeweiligen Modacom Service Provider verbunden. Das SCR Protokoll ermöglicht es, über eine logischen X.25 Verbindung beliebig viele Modacom Modems zu steuern.

Mit Hilfe des Konverter-Prozesses Scrproc werden GSM-, ISDN- und MODEM-Verbindungen an den Prozeß Scrdaemon angeschlossen. Dieser Prozeß bildet das auf der physikalischen Verbindung benutzte RLLP Protokoll auf das SCR Protokoll ab. Die Verbindung zu dem Prozeß Scrdaemon wird mit Hilfe des TCP Protokolls hergestellt. Der Prozeß Scrproc wird aktiviert, wenn sich die Clientkomponente 3 eingewählt hat.

Der Prozeß Scrdaemon weist zwei Untermodule auf:

• Kernmodul
• SCR Modul

Das Kernmodul bearbeitet das RTP Protokoll, und verwaltet alle TCP Verbindungen.

Das SCR Modul wird zur Ansteuerung der Modems verwendet. Es bearbeitet das SCR Protokoll. Als Medium für SCR Verbindungen kann TCP und X.25 eingesetzt werden.

Im folgenden werden die gem. Fig. 1 beim erfindungsgemäßen Programmsystem 1 verwendeten Protokolle erläutert.

RTP Protokoll

Das RTP Protokoll (Radiowave Transmission Protocol) wird zwischen dem MOBILEmanager Client und dem MOBILEmanager Server eingesetzt. Hauptfunktion ist die Bereitstellung eines Mechanismus, mit dem TCP Verbindungen auf dem Medium Funk bereitgestellt werden können. Voraussetzung für das Protokoll ist eine gesicherte Übertragung der Datenpakete, nachfolgend auch PDUs genannt (PDU = Protocol Data Unit, d.h. Protokolldateneinheit), und die Erkennung und Korrektur von Übertragungsfehlern. Die PDUs selbst sind sehr einfach gehalten, um einen Übertragungskosten verursachenden Overhead zu vermeiden. Die maximale PDU Länge beträgt 2000 Bytes, bedingt durch Restriktionen des SCR Protokolls. Das erste Byte jeder PDU hat folgenden Aufbau:

• Bit Nr. 8 Ist dieses Bit gesetzt, so handelt es sich bei der PDU um eine Kommando-PDU. Ist dieses Bit nicht gesetzt, so ist es eine Daten-PDU.

• Bit Nr. 7 Dieses Bit darf nur bei Daten-PDUs gesetzt sein, und zeigt dann an, daß dieses PDU nach V. 42bis komprimierte Daten enthält.

• Bit Nr. 6-1 Diese 6 Bit kodieren eine logische Kanalnummer. Jeder TCP Verbindung vom Client zum Server ist genau 1 Kanal zugeteilt. Zu beachten ist, daß nur die Kanäle 0 bis 61 verwendet werden. Die Kanäle 62 und 63 sind für zukünftige Erweiterungen reserviert.

RTP Daten-PDU

Im Normalfall folgen die Nutzdaten der PDU dem ersten Byte. Komprimierte Nutzdaten werden durch ein gesetztes Bit Nr. 7 im ersten Byte angezeigt. Da es bei der Nutzung des RTP Protokolls mit GSM Modem zu PDU Duplizierungen kommen kann, besteht die Möglichkeit eine optionale Laufnummer in der Daten-PDU mit zu übertragen. Die Verwendung von Laufnummern wird während des Aufbaus einer logischen RTP Verbindung ausgehandelt. Werden für eine RTP Verbindung Laufnummern verwendet, so befinden sich diese im zweiten Byte der PDU und die Nutzdaten beginnen dann ab dem dritten Byte.

RTP Kommando-PDU

Wenn das Bit Nr. 8 im ersten Byte gesetzt ist, so definieren die Bits Nr. 1 bis Nr. 5 im zweiten Byte die Kommando-PDU. Im folgenden sind alle spezifizierten Kommandos aufgelistet:

• **Verbindungsanforderung** (*Connect Request,* Kommando Nr. 1)

   Diese PDU muß mindestens eine IP-Adresse und eine Port-Nummer für TCP-Verbindungsaufbau beinhalten. Die IP-Adresse ist in der PDU in den Bytes Nr. 3 bis Nr. 6 enthalten. Die Reihenfolge der Bytes ist dabei die *Network Byte Order,* d.h. das erste Byte der IP-Adresse steht an Position Nr. 3, das zweite an Position Nr. 4 usw. Nach der IP-Adresse folgt die Port-Nummer an den Positionen Nr. 7 und Nr. 8, ebenfalls in *Network Byte Order.* Im Anschluß an die Port-Nummer kann ein Flag-Byte folgen. Ist dieses Flag-Byte vorhanden, so zeigt ein gesetztes Bit Nr. 1 an, daß für diese logische Verbindung bei allen Daten-PDUs Kompression verwendet wird. Der Unterschied zu dem Kompressionsflag im ersten Byte einer Daten-PDU zeigt sich in der Signifikanz für die Daten-PDU. Bit Nr. 2 legt im Flag-Byte fest, daß für diese logische Verbindung Laufnummern in den Daten-PDUs übertragen werden sollen. Das dritte Bit signalisiert, daß das UDP- anstelle des TCP-Protokolls verwendet werden soll. Nur falls das Flag-Byte in der PDU vorhanden ist, darf ein weiteres Feld mit einer variablen Länge folgen. Das erste Byte dieses Feldes bestimmt die Länge der folgenden Zeichenkette. In diesem Feld wird bei Einsatz von GSM-Modems die Seriennummer eine eindeutige, aus der Client-Software bestehende Kennung, übertragen. Für den Modacom Dienst wird diese Kennung nicht übertragen, da hier die Modem Adresse vom SCR Protokoll bereitgestellt wird. Ist dieses Längenfeld größer als 12, dann steht nach der Kennung der Name und das Kennwort (beide durch Nullbyte getrennt) für die RADIUS Authentifizierung. Sind in der Kommando-PDU weitere Daten vorhanden, wird in den nächsten beiden Bytes der physikalische Träger kodiert.

Hierbei ist folgende Kodierung vorgesehen:

| Modacom | 0x0001 |
|---------|--------|
| GSM UDI | 0x0002 |
| Modem | 0x0010 |
| GSM UDI | 0x0020 |
| ISDN | 0x0040 |
| X.31 | 0x0080 |

Sind in der PDU weitere Daten vorhanden, folgt die Versionsnummer des Client, die mit einem Nullbyte abgeschlossen wird. Ist die PDU noch größer, folgt ein Byte mit einer Längeninformation. Ist diese Länge gleich 4 steht hier die IP-Adresse des Clients. Ist sie größer steht hier die Länge der IMEI-Nummer (Internation Mobile Equipment Identifier) des Handys. Ist die IP-Adresse angegeben, kann zusätzlich auch die IMEI-Nummer folgen. Dies wird wieder anhand der Größe der PDU ermittelt.

- **Verbindungsbestätigung** (*Connect Confirmation,* Kommando Nr. 2)

    Diese PDU beinhaltet das Ergebnis eines Verbindungsaufbaus an den Positionen Nr. 3 und Nr. 4 in *Network Byte Order.* Hat dieses Feld den Wert 0, so ist ein Verbindungsaufbau zu der Server Anwendung erfolgt. In allen anderen Fällen beinhaltet dieses Feld den Fehlerwert für den Windows Sockets *connect* Funktionsaufruf. Ist diese PDU länger als 4 Bytes werden zusätzlich Konfigurationsdaten an den Client übertragen. In Byte 5 wird die Gültigkeit der Werte kodiert. Ist das entsprechende Bit gesetzt, ist der folgende Wert gültig. Byte 5 setzt sich folgendermaßen zusammen:

    Bit 8: immer gesetzt
    Bit 7: Idle-Wert ist gültig
    Bit 6: Poll-Wert ist gültig
    Bit 5: Hold-Wert ist gültig
    Bits 4,3,2: unbenutzt
    Bit 1: Komprimierung eingeschaltet

    Der Idle-Wert steht in den Bytes 6, 7, 8 und 9. Der Poll-Wert steht in den Bytes 10, 11, 12 und 13, der Hold-Wert steht in den Bytes 14, 15, 16 und 17.

- **Verbindungsabbau** (*Disconnect Request*, Kommando Nr. 3)

    Mit dieser PDU wird der Abbau der logischen Verbindung angezeigt. Die PDU hat keine Parameter.

- **Flußkontrolle Stop** (*Flowcontrol Stop,* Kommando Nr. 4)

    Bei Empfang dieser PDU dürfen Daten-PDUs solange nicht übertragen werden, bis eine Flußkontrolle Start PDU empfangen wurde. Diese PDU hat keine Parameter.

- **Flußkontrolle Start** (*Flowcontrol Start,* Kommando Nr. 5)

    Mit dieser PDU kann die Datenübertragung wieder reaktiviert werden. Diese PDU hat keine Parameter.

- **Protokollfehler** (*Reject,* Kommando Nr. 8)

    Mit dieser PDU wird ein Fehlverhalten im Protokoll (z.B. Empfang einer Daten-PDU, wenn keine Verbindung besteht) angezeigt. In Byte Nr. 3 wird das Fehlverhalten kodiert:

| Host nicht erreichbar | 0 |
|-----------------------|---|
| Kein socket | 1 |
| Datenverlust | 2 |
| Komprimierungsfehler | 3 |
| Falsche Sequencenummer | 4 |

- **Erweiterte Verbindungsanforderung** (*Extended* Connect, Kommando Nr. 9)

    Nach dem Verlust der physikalischen Verbindung werden bei deren Wiederaufsetzen die logischen Verbindungen wieder hergestellt. Diese PDU darf nur auf dem reservierten Kanal 63 gesendet werden, und hat als Parameter eine eindeutige Sitzungskennung. Das erste Byte des Parameters bestimmt die Länge der folgenden Sitzungskennung. Ist die Länge größer als 12, dann folgt, durch ein Nullbyte getrennt, der Name und das Kennwort (wiederum durch ein Nullbyte voneinander getrennt) für die RADIUS Authentifizierung. Sind weitere Daten in der PDU vorhanden wird in den folgenden 2 Bytes der physikalische Träger kodiert (zur Kodierung siehe Verbindungsanforderungs-PDU). Ist der Wert der darauffolgenden 2 Bytes größer 0 wird das Callback-Flag gesetzt und der Server ruft zurück. Wenn weitere Daten in der PDU vorhanden sind, wird wie in der Verbindungsanforderungs-PDU die IP-Adresse und die IMEI übertragen.

- **Domain Name Service Request** (*Database Request,* Kommando Nr. 10)

    In dieser PDU werden die Domain Name Service Routinen abgebildet. Dabei wird in Byte Nr. 3 der entsprechende Service kodiert:

| gethostbyname() | 1 |
|---|---|
| gethostbyaddr () | 2 |
| getservbyname() | 3 |
| getservbyport() | 4 |

In Byte 4 steht die Länge der ab Byte 5 folgenden Daten. Diese PDU wird für die Anforderung und die Antwort genutzt.

- **Fehlermitteilung** *(Error Indication,* Kommando Nr. 11)
  In dieser PDU können dem Client Fehler/Texte mitgeteilt werden. Dieser bringt den Text dem Anwender in einer Messagebox zur Anzeige. In Byte 3 und 4 steht die Länge der ab Byte 5 folgenden Daten.

- **Verbindungsbestätigung mit Callback** (*Connect Confirm Callback,* Kommando Nr. 18)
  Empfängt der Client diese PDU wird die physikalische Verbindung beendet und gewartet, daß der Server zurückruft. Intern hat der Server das Callback-Flag gesetzt und ruft automatisch zurück, sobald keine physikalische Verbindung mehr vorhanden ist. Der Aufbau gleicht ansonsten dem von Kommando Nr. 2.

- **Physikalischer Verbindungsabbau** *(Physical Disconnect Request,* Kommando Nr. 19)
  Mit diesem Kommando wird vom Server aus der Short-Hold-Mode gesteuert. Dieses Paket wird dem Client geschickt, der daraufhin die physikalische Verbindung beendet. Des weiteren wird in Byte 3-6 die Idle-Zeit des sockets angegeben.

- **Fehlermitteilung** *(Error Indication 2,* Kommando Nr. 20)
  In dieser PDU können dem Client Fehler/Texte mitgeteilt werden. Dieser bringt den Text dem Anwender in einer Messagebox zur Anzeige. In Byte 3 und 4 steht die Länge der ab Byte 5 folgenden Daten.

- **Datenpaket mit EOF** *(Error Indication 2,* Kommando Nr. 21)
  In dieser PDU werden Daten transportiert und gleichzeitig die logische Verbindung, d.h. der sokket, angeschlossen.

Eindeutige Identifizierung

Für die eindeutige Zuordnung und Identifizierung kommen die Seriennummer der Client-Software, die Rufnummer des Teilnehmers und die IMEI-Nummer des Mobilfunkendgerätes zum Einsatz. Diese Nummer wird in den RTP-Kommando PDUs verwendet.

Protokollablauf

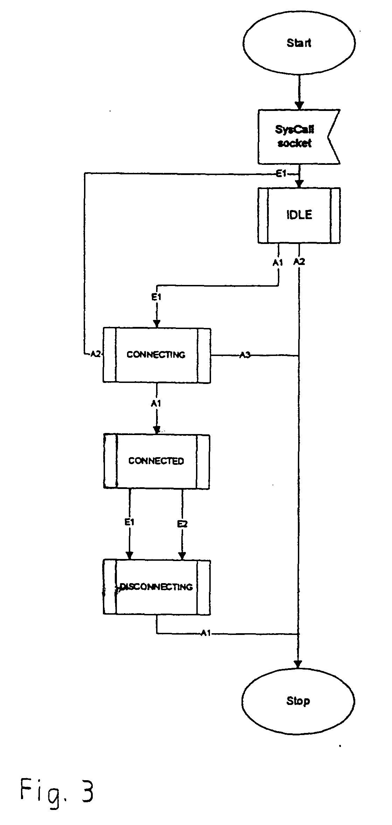

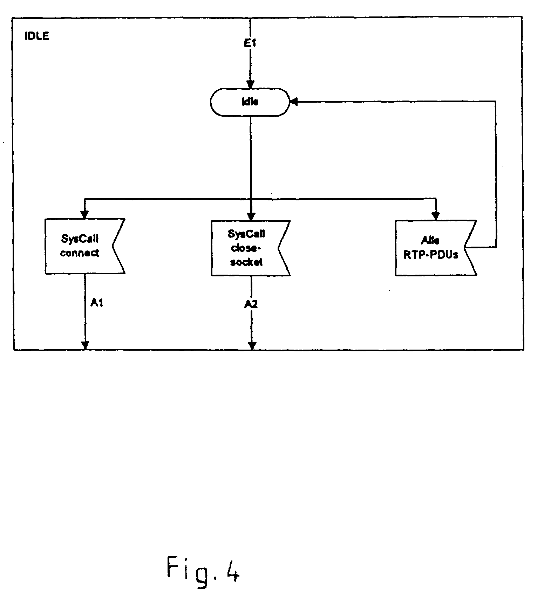

Fig. 3 zeigt eine schematische Darstellung von beim RTP Protokoll von Fig. 1 auftretenden Zuständen. Das RTP Protokoll wird für jede einzelne TCP-Verbindung, d.h. für jeden Socket separat ausgeführt. Einzige Ausnahme hiervon ist das Kommando Nr. 9 (*Extended Connect*). Die einzelnen Zustände im Protokoll entsprechen deswegen immer dem Zustand, den ein einzelner Socket inne hat. Im Zustand *IDLE* befindet sich ein Socket, nachdem er durch den Systemaufruf *socket* alloziert wurde. Fig. 4 zeigt eine schematische Darstellung von Sub-Zuständen des IDLE-Zustands.

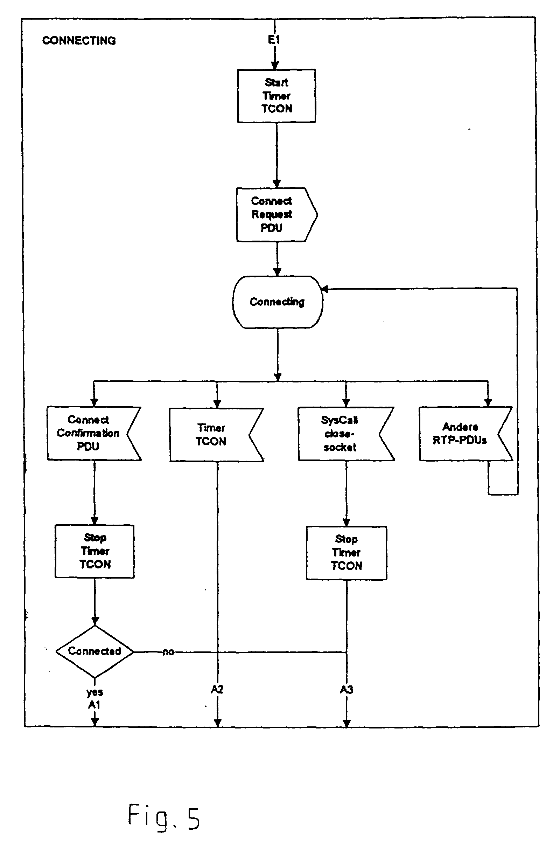

Der Übergang zu *Connecting* findet statt, wenn die Systemfunktion *connect* aufgerufen wird. Fig. 5 zeigt eine schematische Darstellung von Sub-Zuständen des CONNECTING-Zustands.

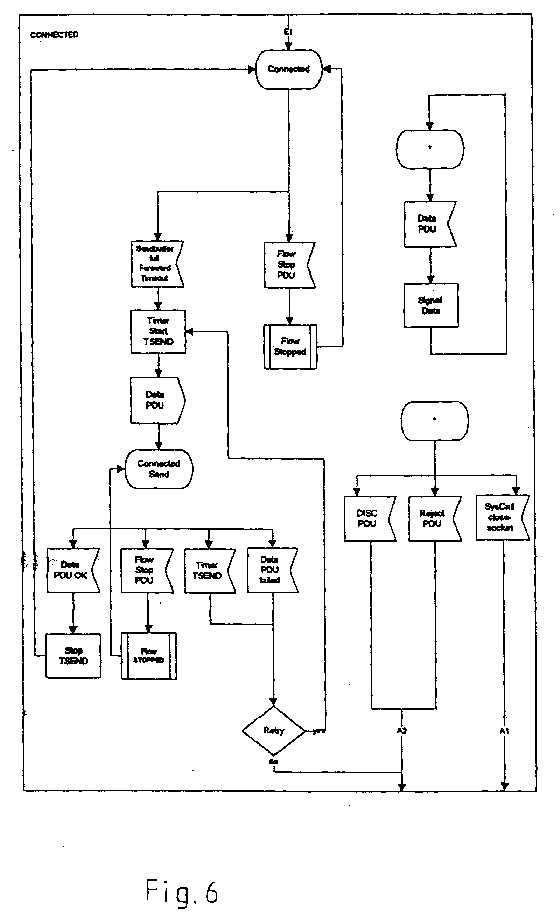

Der Verbindungsaufbauwunsch wird in einer *Connect Request* PDU an den MOBILEmanager Server übertragen. Der Server wird nach Empfang dieser PDU versuchen, die TCP-Verbindung entsprechend aufzubauen. Das Ergebnis wird in Form einer *Connect Confirmation* PDU an das Client System zurückgesendet. Diese PDU beinhaltet das Ergebnis für den Aufruf der Systemfunktion *connect*. Bei einem erfolgreichen Aufbau der TCP-Verbindung vom Server zu einer Anwendung wechselt der *Socket* in den Zustand *CONNECTED*. Fig. 6 zeigt eine schematische Darstellung von dessen Sub-Zuständen.

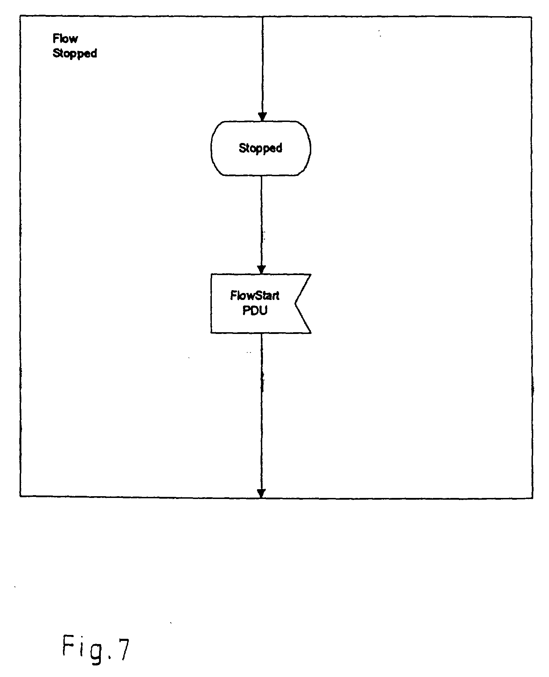

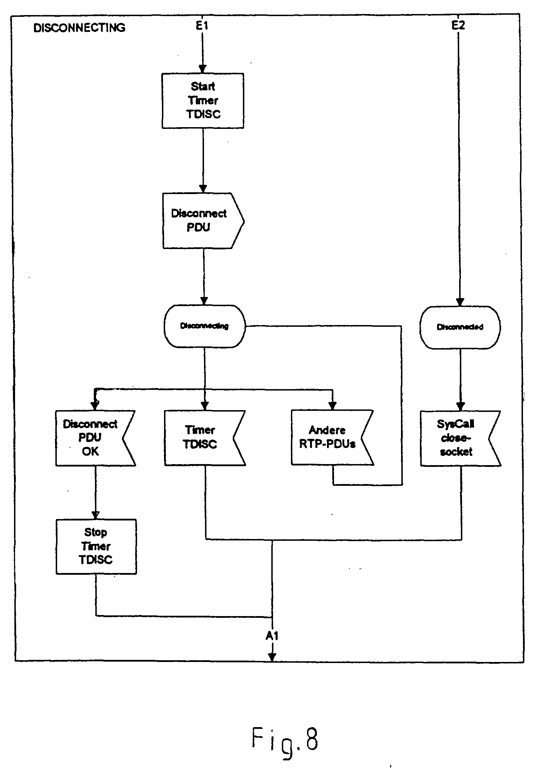

In diesem Zustand (*CONNECTED*) findet der Datentransfer für die TCP-Verbindung statt. Mit der Systemfunktion *send* übergebene Daten werden gesammelt, und dann als Daten-PDU übertragen. Empfangene Daten-PDUs werden gesammelt, bis sie mit der Systemfunktion *recv* ausgelesen werden. Dieser Zustand wird verlassen, wenn die Systemfunktion *closesocket* aufgerufen wird, oder eine *Disconnect* PDU empfangen wird. Dann befindet sich der Socket im Zustand *DISCONNECTING*. Fig. 7 zeigt eine schematische Darstellung von Sub-Zuständen des in Fig. 6 gezeigten FLOW-STOPPED-Zustands. Fig. 8 zeigt eine schematische Darstellung von Sub-Zuständen des DISCONNECTING-Zustands. Nachdem eine *Disconnect* PDU übertragen wurde, ist das Protokoll, und damit der *Socket* beendet.

RLLP Protokoll

Hauptfunktion des RLLP Protokolls (Radiowave Link Level Protocol) ist die Bereitstellung einer gesicherten Übertragung von RTP PDUs, mit folgenden Merkmalen:

- bidirektional (gleichzeitiges Senden von Client und Server ist möglich)
- streamorientiert
- Absicherung aller Protokollinformationen über ein 32 Bit CRC
- Windowsmechanismus (maximale Fenstergröße 7)
- variabler, konfigurierbarer Escapemechanismus

RLLP Protokollablauf

PDU Aufbau

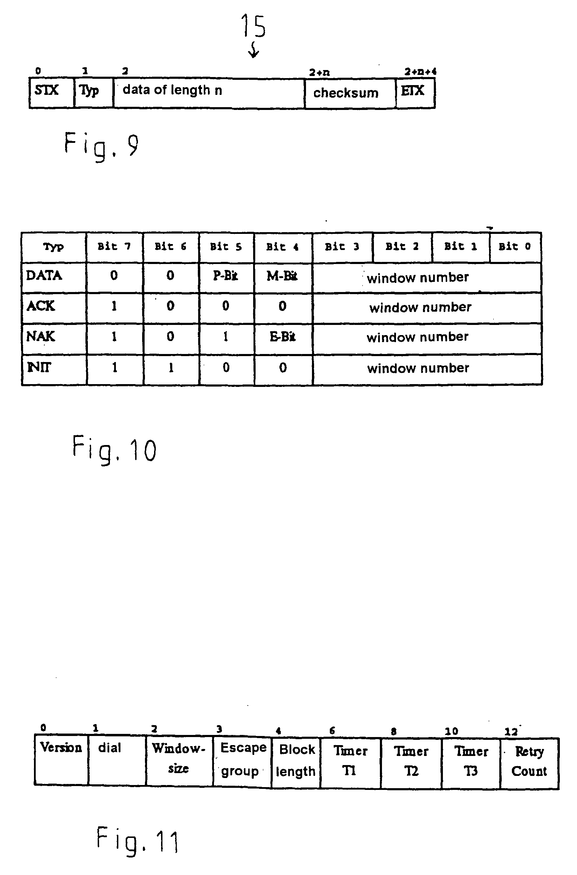

Der Aufbau einer PDU bzw. eines Datenpakets 15 ist in Fig. 9 gezeigt. Alle PDUs beginnen mit einem STX-Zeichen, und enden mit einem ETX-Zeichen. Eine Längeninformation ist nicht enthalten, so daß es keine Blocklängenbeschränkung gibt.
Unmittelbar vor dem ETX-Zeichen werden 4 Byte Prüfsumme übertragen. Die Prüfsummenberechnung beginnt nach dem STX-Zeichen und beinhaltet alle Zeichen zwischen STX-Zeichen und Prüfsumme.
Nach dem STX-Zeichen folgt ein Byte mit PDU-spezifischen Informationen, dann folgen optional die eigentlichen Nutzdaten. Die Gesamtlänge der PDU ergibt sich damit aus der Länge der Nutzdaten zuzüglich 7 Byte Protokollinformation.
Die 8 Bit des PDU Typs sind wie in Fig. 10 dargestellt organisiert.
Die DATA PDU wird immer mit dem optionalen Datenteil gesendet. Die Windownummer liegt im Bereich zwischen 2 und 15.
PDUs mit gesetztem M-Bit (More Data Bit) müssen zu einer RTP PDU zusammengesetzt werden. Wenn in der DATA PDU das M-Bit nicht gesetzt ist, so ist die empfangene PDU der letzte Teil der RTP PDU. Nach Empfang dieser PDU wird die RTP PDU der nächst höheren Schicht signalisiert.
Ist das P-Bit (Poll-Bit) gesetzt, so wird damit der Empfänger der DATA PDU aufgefordert, den korrekten Empfang sofort zu bestätigen.

ACK PDU

Die ACK PDU wird ohne Datenteil gesendet. Sie dient zum Bestätigen des Empfangs von PDUs des Typs DATA oder INIT. Als Windownummer wird die Windownummer der zuletzt korrekt empfangenen PDU eingetragen. Damit werden implizit alle vorher empfangenen und möglicherweise unbestätigten PDUs bestätigt.

NAK PDU

Die NAK PDU wird ohne Datenteil gesendet. Sie dient zum Signalisieren von Übertragungsfehlern. Als Windownummer wird die Windownummer der zuletzt korrekt empfangenen PDU zuzüglich 1 eingetragen. Die Windownummer ist damit die Windownummer der DATA PDU, die vom Empfänger als nächstes erwartet wird.

Das E-Bit wird dann gesetzt, wenn der Empfänger einer DATA PDU der Ansicht ist, daß ein Verringern der Blocklänge sinnvoll ist. Für den Absender der DATA PDU (und damit dem Empfänger der NAK PDU) ist das E-Bit nur eine Empfehlung. Das E-Bit sollte z.B. gesetzt werden, wenn beim Empfang Datenverluste aufgetreten sind. Es sollte nicht gesetzt werden, wenn ein Prüfsummenfehler festgestellt wurde. Der Empfänger der NAK PDU muß selber entscheiden, wie auf das E-Bit reagiert wird. Sinnvoll ist es, bei gesetztem E-Bit sofort die Blocklänge zu verringern, während bei nicht gesetztem E-Bit die Übertragung noch mehrmals mit gleicher Blocklänge wiederholt werden kann. Eine NAK PDU darf nur einmal in Folge gesendet werden. Erst wenn eine Daten PDU fehlerfrei empfangen wurde, darf wieder eine NAK PDU gesendet werden.

INIT PDU

Die INIT PDU muß zu Beginn einer Verbindung vom Client an den Server gesendet werden, dies gilt auch für eine Wiederanwahl. Mit der INIT PDU konfiguriert der Client alle Protokollparameter beim Server. Da die INIT PDU nur zu Beginn einer Sitzung verwendet wird, ist die Windownummer immer 0. Mit diesem Wert muß der Windowmechanismus initialisiert werden.
Der Datenteil der INIT PDU hat den in Fig. 11 gezeigten Aufbau.

- Version
  Hier steht in einem Byte die aktuelle Versionsnummer (derzeit 0x30).

- Anwahl
  In diesem Byte werden die Anwahlen mitgezählt. Wird mehr als 255 mal angewählt, bleibt der Zähler auf dem Wert 255. Bei der ersten Anwahl ist der Wert 1.

- Windowsize
  In diesem Byte wird die zu nutzende Windowsize eingetragen. Die erlaubten Werte liegen zwischen 2 und 15.

- Escape-Gruppe
  In diesem Byte wird die Escape-Gruppe festgelegt. Escape-Gruppen sind vordefinierte Sets von Steuerzeichen, die für die Übertragung "escaped" werden müssen. Das Escape-Zeichen lautet 0x18, und das zu "escapende" Zeichen wird mit 0x40 per "Exklusiv Or" verändert.
  Die Escape-Gruppe 1 beinhaltet die Zeichen: 0x02 (STX), 0x03 (ETX), 0x11 (Start "Q), 0x13 (Stop "S) und 0x18 (Escape).

- Blocklänge
  In diesem Short wird eine vorgeschlagene Blocklänge übertragen. Der Server darf diesen Vorschlag ignorieren. Die Blocklänge wird in "Network Order", d.h. das höherwertige Byte zuerst, übertragen. Der Wertebereich geht von 64 bis 65535.

- Timer-T1

  In diesem Short wird der Timer T1 übertragen. Der Wert ist in Millisekunden angegeben, und darf von 1 bis 65535 gehen. Die Übertragung erfolgt in "Network Oder", d.h. das höherwertige Byte zuerst.

  Der Timer T1 legt die Zeitspanne fest, nach der die letzte empfangene DATA/INIT PDU bestätigt werden muß, falls keine weiteren DATA PDUs empfangen worden sind. Nach Ablauf dieser Zeitspanne wird eine ACK PDU mit der Windownummer der zuletzt empfangenen und unbestätigten PDU gesendet. Der Wert von T1 muß immer signifikant kleiner als der Wert von T2 sein, damit nicht eine Wiederholung stattfindet, bevor die Bestätigung erfolgt.

- Timer-T2

  In diesem Short wird der Timer T2 übertragen. Der Wert ist in Millisekunden angegeben, und darf von 1 bis 65535 gehen. Die Übertragung erfolgt in "Network Order", d.h. das höherwertige Byte zuerst.

  Der Timer T2 legt die Zeitspanne fest, in der auf eine Bestätigung zu einer versandten PDU (DATA oder INIT) gewartet wird. Nach Ablauf dieser Zeitspanne beginnt der erneute Versand der unbestätigten PDUs.

- Timer-T3

  In diesem Short wird der Timer T3 übertragen. Der Wert ist in Millisekunden angegeben, und darf von 1 bis 65535 gehen. Die Übertragung erfolgt in "Network Order", d.h. das höherwertige Byte zuerst.

  Der Timer T3 legt die Zeitspanne fest, innerhalb derer nach Empfang eines STX Zeichens weitere Zeichen folgen müssen. Dieser Timer wird verwendet, um zu erkennen, ob das Einlesen einer PDU aufgrund von Datenverlusten abgebrochen werden muß. Nach Ablauf des Timers T3 muß eine NAK PDU mit der Fensternummer der nächsten erwarteten DATA PDU gesendet werden.

- Retry-Count

  In diesem Byte wird die maximale Anzahl von Wiederholungen für eine unbestätigte PDU angegeben. Wenn der Wiederholungszähler dieses Limit erreicht, muß der jeweilige Sender die Datenverbindung beenden.

Protokollverhalten

Initialisierung

Der Client beginnt die Initialisierung, indem er eine INIT PDU an den Server sendet. Der Server muß den Empfang sofort mit einer ACK PDU bestätigen.

Wird ein NAK empfangen, so wird die PDU sofort wiederholt. Wird kein ACK empfangen, so wird die PDU nach Ablauf von T2 wiederholt. Wenn der Retry-Count überschritten wird, beendet der Client die Verbindung. Der Empfänger der INIT PDU muß mit den empfangenen Parametern sein Protokollmodul initialisieren.

Transfer

Beim Versenden wird ein Fenstermechanismus genutzt. Die Windownummer liegt immer im Bereich von 0 bis (WindowSize -1). Beim Versand dürfen bis zu WindowSize DATA PDUs ohne eine Bestätigung abzuwarten nacheinander übertragen werden. Erst wenn die WindowSize ausgeschöpft ist, muß auf eine Bestätigung gewartet werden. Wird eine Bestätigung empfangen, können die nächsten DATA PDUs übertragen werden, allerdings auch nur, bis WindowSize DATA PDUs unbestätigt sind.

Die WindowNummer wird mit folgendem Algorithmus berechnet:

$$winnr = (winnr + 1) \; MODULO \; WindowSize.$$

Der Empfänger der DATA PDUs sollte mit den Bestätigungen nicht warten, bis die Fenstergröße ausgeschöpft ist. Stattdessen sendet er, nachdem das Fenster etwa zur Hälfte ausgeschöpft ist, das ACK PDU. Damit wird ein kontinuierlicher Datenstrom sichergestellt.

Wenn für den Sender absehbar ist, daß er keine weiteren Daten übertragen muß, wird in der letzten DATA PDU das P-Bit gesetzt.

Im folgenden werden die Abläufe für den Empfang von PDUs beschrieben:

Empfang DATA PDU

Es wird geprüft, ob das P-Bit gesetzt ist. Wenn ja, wird sofort eine ACK PDU gesendet. Außerdem wird geprüft, ob die Anzahl der empfangenen und unbestätigten DATA PDUs größer-gleich der halben WindowSize ist. Wenn ja, wird sofort eine ACK PDU gesendet.

Zusätzlich wird geprüft, ob das M-Bit nicht mehr gesetzt ist. Wenn nicht gesetzt, werden die noch nicht der höheren Schicht signalisierten DATA PDUs (bei denen das M-Bit immer gesetzt seinmuß) zu einer RTP PDU zusammengefügt, und der höheren Schicht signalisiert. Andernfalls (also bei nicht gesetztem M-Bit) wird die PDU zwecks späterem Zusammenfügen an eine Liste angehangen.

Empfang ACK PDU

Nach Empfang einer ACK PDU können die bestätigten DATA PDUs aus dem Sendebuffer gelöscht werden.
Es wird geprüft, ob die letzten 10 DATA PDUs fehlerfrei übertragen worden sind. Wenn das der Fall ist, werden die nächsten DATA PDUs mit einer um 25% erhöhten Blocklänge gesendet.
Schließlich werden wieder DATA PDUs übertragen, bis die WindowSize ausgeschöpft ist.

Empfang NAK PDU

Mit einer NAK PDU werden gesendete PDUs bis zur (ausschließlich) angeforderten Windownummer implizit bestätigt. Diese DTA PDUs werden aus dem Sendebuffer gelöscht.
Wenn das E-Bit gesetzt ist, wird die Blocklänge um 25% vermindert. Andernfalls wird die Blocklänge nur dann um 25% vermindert, wenn dies der zweite Folgefehler ist.
Schließlich werden die DATA PDUs des Sendebuffers nochmals übertragen. Danach können auch neue DATA PDUs übertragen werden, bis die WindowSize ausgeschöpft ist.
Wird das Limit für Wiederholungen einer DATA PDU überschritten, so muß der höheren Schicht ein Fehler signalisiert werden, damit diese die Verbindung beenden kann.

Timer T1

Nach Ablauf des Timers T1 muß die zuletzt empfangene und noch unbestätigte DATA PDU bestätigt werden.
Dieser Fall sollte nur sehr selten auftreten, da in einer Transferphase schon nach Ausschöpfen der halben Fenstergröße bestätigt wird. Am Ende einer Transferphase hat der Sender durch Setzen des P-Bits die Möglichkeit, sofort eine Bestätigung anzufordern.

Timer T2

Nach Ablauf des Timers T2 werden alle PDUs des Sendbuffers (d.h. alle unbestätigten PDUs) erneut übertragen. Es findet der gleiche Ablauf wie beim Empfang einer NAK PDU statt.

Timer T3

Nach Ablauf des Timers T3 wird eine NAK PDU mit der erwarteten Fensternummer versendet. Der Timer T3 darf nur dann gestartet werden, wenn das Einlesen einer PDU begonnen hat, d.h. mindestens das STX-Zeichen gelesen worden ist.

PDU Einlesen

Das Einlesen einer PDU beginnt, wenn das STX-Zeichen gelesen wird, und endet wenn das ETX-Zeichen gelesen wird. Wenn ein Bufferüberlauf auftritt, oder der Timer T3 abläuft, bevor das ETX-Zeichen gelesen wird, wird das Einlesen abgebrochen und ein NAK mit gesetztem E-Bit gesendet.
Werden Zeichen empfangen, ohne daß ein STX-Zeichen empfangen worden ist, wird ein NAK mit gesetztem E-Bit gesendet.
Nach Empfang des ETX-Zeichens wird die Prüfsumme kontrolliert. Stimmt sie nicht, wird ein NAK ohne gesetztes E-Bit gesendet.
Bei korrekter Prüfsumme wird der PDU-Typ ausgewertet, und es folgt die Behandlung gemäß der vorhergegangenen Beschreibungen.

Fehlerfälle

Verlust einer DATA PDU

Der vollständige Verlust einer DATA PDU ist sehr unwahrscheinlich, da in der Regel immer einige Zeichen ankommen, und daher während des Einlesens einer PDU ein NAK gesendet würde.
Geht dennoch eine komplette DATA PDU verloren, so wird das anhand der Fensternummer erkannt. Stimmt die Fensternummer nicht mit der erwarteten überein, so muß ein NAK mit der erwarteten Fensternummer gesendet werden.
Geht die letzte PDU eines Transfers verloren, so wiederholt der Sender nach Ablauf des Timers T2 die PDU.

Verlust einer INIT PDU

Hierfür gilt das oben in Zusammenhang mit DATA PDUs gesagte. Allerdings kann es nicht zu einem Laufnummernfehler kommen.

Verlust einer ACK PDU

Dies wird nach Ablauf des Timers T2 kompensiert.

Verlust einer NAK PDU

Dies wird nach Ablauf des Timers T2 kompensiert.
Das RadioWave Protokoll ist ein von der Art und Anzahl der zur Verbindung erforderlichen Netze unabhängiges End-zu-End Verfahren. Es bietet eine Trennung von physikalischer und logischer Verbindung. Ein intelligentes Session-Management als auch ein dynamisches Verfahren zur Optimierung der Funkdatenübertragung. Eine logische Verbindung ist eine vom aktuellen Zustand der physikalischen Verbindung unabhängige Verbindung. Den Kommunikationsteilnehmern wird das Bestehen einer permanenten physikalischen Verbindung vorgetäuscht. Der Vorteil der trennung von logischer und physikalischer Sitzung liegt in der Sicherung der Funktionsfähigkeit von Anwendungen auch über instabile Verbindungen, wie sie besonders im Funknetz vorkommen.

Die physikalische Verbindung kann entweder gewollt oder ungewollt getrennt werden. Bei der gewollten physikalischen Trennung wird dem Wählautomaten nach einer einstellbaren Zeit, in der keine Daten transportiert wurden, mitgeteilt, daß er die Verbindung trennen soll. Im Falle von neuen Datenanforderungen wird der Wählautomat wiederum informiert und dieser baut eine neue Verbindung auf. Hiermit können beispielsweise Kosten für die Datenübertragung gespart werden. Bei der ungewollten Trennung, z.B. aufgrund unzureichender Funkabdeckung, erkennt der Wählautomat dies automatisch und baut eine neue Verbindung auf.

Anhand der dabei übertragenen Daten (z.B. in den RTP Kommando-PDUs zum Aufbau der neuen physikalischen Datenverbindung, siehe oben RTP Kommando-PDU) werden charakteristische Größen für die physikalische Verbindung ermittelt, sogenannte Sitzungsparameter, wie z.B. die Seriennummer der Client-Software, die Rufnummer, die IMEI-Nummer des Mobilfunkendgerätes. Diese ermittelten Sitzungsparameter werden mit nach den verschiedenen noch nicht beendeten logischen Sitzungen gespeicherten Sitzungsparametern verglichen. Wird hierbei eine Übereinstimmung mit allen gespeicherten charakteristischen Größen einer gespeicherten Sitzungsnummer gefunden, so wird erkannt, daß es sich bei der neuen physikalischen Verbindung um eine Wiederaufnahme einer alten physikalischen Verbindung handelt, welche der alten Sitzungsnummer zugeordnet ist. Im Protokollautomaten erfolgt dann weiterhin eine Zuordnung zu den vorhergehenden Sitzungsdaten, und der Datentransport wird wieder aufgenommen. Hierbei kommt es zu keinerlei Datenverlust. Die Anwendungen merken von diesen Vorgängen nichts.

Wie oben im Detail erläutert bietet das Radio-Wave Protokoll weiterhin ein dynamisches Verfahren zur Optimierung der Funkdatenübertragung, bzw. allgemein der Datenübertragung über die Datenverbindung, indem es die Verbindungsqualität analysiert (anhand der empfangenen bzw. Nicht-empfangenen Datenpakete) und die Paketierung steuert (z.B. wie oben beschrieben, die Datenpaketlänge vergrößert oder verkleinert, bei schlechter Verbindungsqualität werden nur sehr kleine Datenpakete versandt). Die Anpassung der Datenpakete erfolgt hierber dynamisch während der Übertragung der Nutzdaten, nachdem also alle Parameter für die Datenübertragung zwischen den beiden Endgeräten ausgehandelt wurden. Mit anderen Worten wird die Paketgröße permanent der aktuellen Verbindungsgüte angepaßt. Vorteilhaft werden mit diesem dynamischen Verfahren maximale Übertragungsgeschwindigkeiten bei verschiedenen Übertragungsgüten erreicht, ohne zu Lasten der Datensicherheit.

Ferner wird im Falle von Paketverlusten im Gegensatz zum Stand der Technik nicht ab dem verlorenen Paket alles erneut versandt, sondern es wird ermittelt, welche Pakete erfolgreich versandt wurden und welche nicht. Es werden nur genau die fehlenden Datenpakete erneut angefordert. Somit wird bei einem Verlust von Datenpaketen nur ein Minimum an Datenpaketen erneut übertragen. Besonders bei schmalbandigen Verbindungen, beispielsweise in Funknetzen, ist dies besonders vorteilhaft. Das RadioWave Protokoll ist unabhängig vom darunterliegenden Übertragungsmedium.

Nachfolgend wird noch einmal auf die verschiedenen charakteristischen Größen eingegangen, welche für die Zuordnung zu einer logischen Datenverbindung herangezogen werden. Die IMEI-Nummer (Internation Mobile Equipment Identifier) ist im Mobilfunkgerät einprogrammiert und unveränderbar und wird somit immer mit dieser eindeutigen Kennung ausgeliefert. Diese Eigenschaft wird zur Identifikation des Kommunikationsteilnehmers ausgenutzt. Dazu ermittelt der Wählautomat über Kommandos, die durch den Gerätehersteller spezifiziert werden, diese Kennung. Diese wird im Identifikations-Datenpaket integriert (siehe oben, zu RTP Kommando-PDU). Die IMEI-Nummer ist 15-stellig und setzt sich unter anderem aus einem Herstellercode, einem Herstellerland-Code und einer laufenden Nummer zusammen. Auch das der Erfindung zugrundeliegende Computerprogrammprodukt wird mit einer unikalen Seriennummer ausgeliefert, die zum Zeitpunkt der Installation anzugeben ist. Die Korrektheit der Seriennummer wird mit einer Prüfsumme (Activation Key) geprüft. Diese Seriennummer wird in der Software fest integriert und als Identifikationsmerkmal genutzt. Somit ist es beispielsweise nicht möglich, daß sich zwei Clients zeitgleich mit ein und derselben Seriennummer einwählen. Ferner kann die Rufnummer des Teilnehmers ebenfalls überprüft werden, sofern sie im Netz verfügbar ist. Diese Liste ist nicht abschließend, sondern stellt nur einen Ausschnitt der für die Erkennung einer physikalischen Verbindung heranziehbaren charakteristischen Größen dar. Die genannten Größen werden kombiniert und zur oben erwähnten Zuordnung einer logischen Datenverbindung (Anwender, EDV-Anwendung, beispielsweise über ihre IP-Adresse und eine Portnummer festgelegt, etc.) verwendet.

Nachfolgend wird noch einmal zusammenfassend auf die oben diskutierten (Wähl)-Automaten eingegangen. Die Automaten stellen eine physikalische Verbindung bereit (z.B. initiieren und kontrollieren sie den Verbindungsaufbau unabhängig vom Übertragungsmedium). Jeder Automat unterstützt ein gängiges Kommunikationsendgerät, eine Schnittstelle, etc. (z.B. COM (verschiedene Geräte-Kommandosätze), TAPI (Telefon-API), CAPI (ISDN Common-API, verschiedene Versionen), etc.. Beispielsweise werden die Bestätigungsverfahren abhängig vom Übertragungsdienst und -gerät gewählt. Ferner werden vom Wählautomaten Geräte- und Diensteparameter ausgelesen und automatisch zur Identifikation übertragen. Zudem erkennt der Automat Verbindungsabbrüche und kann darauf geeignet reagieren. Im Gegensatz zu den bekannten Wählautomaten werden bei der Erfindung die Wählaktivitäten in allen Fällen ohne jeglichen Benutzereingriff gesteuert. Außerdem ist es für den Benutzer oder das benutzende Programm absolut irrelevant, um welche Art von Verbindungs- und Einwählverfahren es sich handelt. Der Wählautomat bietet zwei verschiedene Verhaltensweisen zur Optimierung der Datenverbindung, die für verschiedene Einsatzzwecke vorgesehen sind. Bei eingestellter erster Verhaltensweise (Short-Hold-Modus) wird eine physikalische Datenverbindung nach einer konfigurierbaren Zeit automatisch getrennt, wenn für die bestehende physikalische Datenverbindung keine Daten mehr zu übertragen sind. Bei eingestellter zweiter Verhaltensweise (Abbauverzögerungsmodus) wird eine physikalische Datenverbindung für einen konfigurierbaren Zeitraum offen gehalten, obwohl aktuell keine Daten zu übertragen sind. Diese Verhaltensweise wurde insbesondere für Anwendungen entwickelt, die nur für sehr kurze Zeit Windows Sockets zur Datenübertragung verwenden und diese wieder schließen (z.B. Web-Browser). Vorteilhaft werden hiermit überflüssige An- und Abwahlvorgänge vermieden. Da diese beiden Verhaltensweise konkurrieren, kann separat für jede Applikation konfiguriert werden, welche von ihnen verwendet werden soll.

Der Wählautomat bietet eine optimale Unterstützung von instabilen Verbindungen, wie sie häufig im Datenfunk anzutreffen sind. Im Falle von Funkabbrüchen wird automatisch sofort wieder angewählt. Bei Verbindungen mit schlechter Leitungsqualität stimmt sich der Wählautomat mit dem RadioWave Protokoll Automaten über diesen Zustand ab und entscheidet über das weitere Vorgehen. Der Wählautomat trennt die physikalische Datenverbindung und wählt neu an. Im Normalfall wird mit der nächsten physikalischen Verbindung eine bessere Verbindungsqualität erhalten. Ist diese Verbindung wieder von schlechter Qualität, so wird wiederum erneut angewählt.

**Patentansprüche**

1.  Vorrichtung (3, 4) zum Verwalten der Datenübertragung über eine verbindungsorientierte Datenverbindung, insbesondere eine Funktelefonverbindung, die folgendes umfaßt:

    - Umwandlungsmittel zum Umwandeln von zu übertragenden Nutzdaten in aufeinanderfolgende Datenpakete (15);
    - Erfassungsmitteln zum Erfassen der Übertragungsqualität der Datenübertragung während der Übertragung der Nutzdaten; und

    - Verwaltungsmittel zum Anpassen der pro Zeiteinheit übertragenen Nutzdatenmenge in Abhängigkeit von der erfaßten Übertragungsqualität während der Übertragung der Nutzdaten.

2.  Vorrichtung (3,4) nach Anspruch 1, bei welcher die Verwaltungsmittel derart ausgestaltet sind, daß sie die Länge der Datenpakete anpassen.

3.  Vorrichtung (3, 4) nach Anspruch 1 oder 2, bei welcher die Umwandlungsmittel derart ausgestaltet sind, daß sie gemäß dem TCP/IP-Protokoll empfangene Nutzdaten in die über die Datenverbindung zu übertragenden Datenpakete umwandeln .

4.  Vorrichtung (3, 4) nach einem der vorhergehenden Ansprüche, bei welcher die Erfassungsmittel derart ausgestaltet sind, daß sie die Übertragungsqualität anhand des Verhältnisses von empfängerseitig fehlerfrei empfangenen Datenpaketen zu gesendeten Datenpaketen ermitteln.

5.  Vorrichtung (3, 4) nach Anspruch 4, bei welcher die Erfassungsmittel derart ausgestaltet sind, daß sie das Verhältnis mit einem Schwellwert vergleichen und die Übertragungsqualität bei Erfüllen der Schwellwertbedingung als gut und bei Nicht-Erfüllen der Schwellwertbedingung als schlecht einstufen.

6.  Vorrichtung (3, 4) nach Anspruch 5, bei welcher die Verwaltungsmittel derart ausgestaltet sind, daß sie die Länge der Datenpakete bei als schlecht eingestufter Übertragungsqualität verkürzen und bei als gut eingestufter Übertragungsqualität verlängern.

7.  Vorrichtung (3, 4) nach Ansprüche 6, bei welcher die Verwaltungsmittel derart ausgestaltet sind, daß sie die Länge der Datenpakete bei als schlecht eingestufter Übertragungsqualität um etwa 25% verkürzen und bei als gut eingestufter Übertragungsqualität um etwa 25% verlängern.

8.  Vorrichtung (3, 4) nach einem der vorhergehenden Ansprüche, welche ferner Mittel zum Zwischenspeichern von zu übertragenden Datenpaketen, zum Ermitteln von nicht oder nicht fehlerfrei übertragenen Datenpaketen und zum erneutem Übersenden genau der nicht oder nicht fehlerfrei übertragenen Datenpakete aufweist.

9.  Vorrichtung zum Verwalten der Datenübertragung über eine physikalische verbindungsorientierte Datenverbindung, insbesondere eine Funktelefonverbindung, welche folgendes umfaßt:

    - Mittel zum Ermitteln von für die gesamte Datenverbindung charakteristische Identifikationsmerkmale, insbesondere eine Software-Identifikationsnummer;

- Mittel zum Zuordnen einer physikalischen Verbindung zu einer logischen Datenverbindung anhand der ermittelten charakteristischen Identifikationsmerkmale; und

- Mittel zum Speichern von bestehenden logischen Datenverbindungen anhand ihrer zugehörigen Identifikationsmerkmale.

10. Vorrichtung nach Anspruch 9, bei welcher die Zuordnungsmittel derart ausgestaltet sind, daß sie eine neu aufgebaute physikalische Verbindung einer bestehenden logischen Datenverbindung zuordnen, indem sie die für diese neu aufgebaute physikalische Datenverbindung ermittelten Identifikationsmerkmale mit den nach logischen Datenverbindungen gespeicherten Identifikationsmerkmalen vergleichen und bei Übereinstimmung die zugehörige logische Datenverbindung zuordnen.

11. Vorrichtung nach Anspruch 9 oder 10, welche einen Zeitdauerzähler aufweist, der derart ausgestaltet ist, daß nach Ablauf einer vorbestimmten Zeitdauer, während der keine zu übertragenden Daten vorliegen, die physikalische Datenverbindung automatisch abbricht.

12. Vorrichtung nach Anspruch 10 oder 11, welche automatische Verbindungsaufbaumittel aufweisen, die derart ausgestaltet sind, daß sie nach Unterbrechung einer physikalischen Datenverbindung, deren logische Datenverbindung noch besteht, für diese logische Datenverbindung automatisch eine neue physikalische Datenverbindung aufbauen.

13. Vorrichtung (3, 4) nach einem der vorhergehenden Ansprüche, welche zum Verwalten der Datenübertragung über eine Funkverbindung ausgestaltet ist.

14. Vorrichtung (3, 4) nach Anspruch 13, welche zum Verwalten der Datenübertragung über ein Mobiltelefon ausgestaltet ist.

15. Vorrichtung (3, 4) nach einem der vorhergehenden Ansprüche, welche zum Steuern der Datenübertragung über ein Modem (7, 8, 9) ausgestaltet ist.

16. Vorrichtung nach Anspruch 15, bei welcher die automatischen Verbindungsaufbaumittel mit dem Modem verbindbar sind und diese derart ansteuern, daß das Modem die Telefonnummer eines für die logische Datenverbindung empfängerseitig vorliegenden Client- oder Serverrechners wählt.

17. Vorrichtung nach einem der Ansprüche 9 bis 16, welche ferner eine Vorrichtung nach einem der Ansprüche 1 bis 8 umfaßt.

18. Vorrichtung nach Anspruch 17, bei welcher die Verwaltungsmittel derart ausgestaltet sind, daß sie nach einer Unterbrechung der physikalischen Datenverbindung nur solche Datenpakete (15) übertragen, die noch nicht als fehlerfrei empfangen bestätigt waren.

19. Vorrichtung nach Anspruch 17 oder 18, bei welcher die Verwaltungsmittel für eine bestehende logische Datenverbindung die physikalische Datenverbindung bei schlechter Übertragungsqualität automatisch abbrechen und die automatischen Verbindungsaufbaumittel veranlassen, eine neue physikalische Datenverbindung für diese logische Datenverbindung aufzubauen.

20. Verfahren zum Verwalten der Datenübertragung über eine verbindungsorientierte Datenverbindung, insbesondere eine Funktelefonverbindung, welches die folgenden Schritte umfaßt:

- Umwandeln von zu übertragenden Nutzdaten in aufeinanderfolgende Datenpakete (15);
- Erfassen der Übertragungsqualität der Datenübertragung während der Übertragung der Nutzdaten; und
- Anpassen der pro Zeiteinheit übertragenen Nutzdatenmenge in Abhängigkeit von der erfaßten Übertragungsqualität während der Übertragung der Nutzdaten.

21. Verfahren nach Anspruch 20, bei welchem die Länge der Datenpakete angepaßt wird.

22. Verfahren nach Anspruch 20 oder 21, bei welchem gemäß dem TCP/IP-Protokoll empfangene Nutzdaten in die über die physikalische Datenverbindung zu übertragenden Datenpakete umgewandelt werden.

23. Verfahren nach einem der Ansprüche 20 bis 22, bei welchem die Übertragungsqualität anhand des Verhältnis von empfängerseitig fehlerfrei empfangenen Datenpaketen zu gesendeten Datenpaketen ermittelt wird.

24. Verfahren nach Anspruch 23, bei welchem das ermittelte Verhältnis mit einem Schwellwert verglichen wird und die Übertragungsqualität bei Erfüllen der Schwellwertbedingung als gut und bei Nicht-Erfüllen der Schwellwertbedingung als schlecht eingestuft wird.

25. Verfahren nach Anspruch 24, bei welchem die Länge der Datenpakete bei als schlecht eingestufter Übertragungsqualität verkürzt und bei als gut eingestufter Übertragungsqualität verlängert wird.

**26.** Verfahren nach Anspruch 25, bei welchem die Länge der Datenpakete bei als schlecht eingestufter Übertragungsqualität um etwa 25% verkürzt und bei als gut eingestufter Übertragungsqualität um etwa 25% verlängert wird.

**27.** Verfahren nach einem der Ansprüche 20 bis 26, bei welchem zu übertragende Datenpakete zwischengespeichert werden, nicht oder nicht fehlerfrei übertragene Datenpakete ermittelt werden und genau die nicht oder nicht fehlerfrei übertragenen Datenpakete erneut übertragen werden.

**28.** Verfahren zum Übertragen von Daten über eine physikalische verbindungsorientierte Datenverbindung, insbesondere eine Funktelefonverbindung, welches folgende Schritte umfaßt:

- Ermitteln von für die gesamte Datenverbindung charakteristischen Identifikationsmerkmalen, insbesondere einer Software-Identifikationsnummer;
- Zuordnen einer physikalischen Verbindung zu einer logischen Datenverbindung anhand der ermittelten charakteristischen Identifikationsmerkmale; und
- Speichern von bestehenden logischen Datenverbindungen anhand ihrer zugehörigen Identifikationsmerkmale.

**29.** Verfahren nach Anspruch 28, bei welchem eine neu aufgebaute physikalische Verbindung einer bestehenden logischen Datenverbindung zugeordnet wird, indem die für diese neu aufgebaute physikalische Datenverbindung ermittelten Identifikationsmerkmale mit den nach logischen Datenverbindungen gespeicherten Identifikationsmerkmalen verglichen werden und bei Übereinstimmung die zugehörige logische Datenverbindung zugeordnet wird.

**30.** Verfahren nach Anspruch 28 oder 29, bei welchem nach Ablauf einer vorbestimmten Zeitdauer, während der keine zu übertragenden Daten vorliegen, die physikalische Datenverbindung automatisch abgebrochen wird.

**31.** Verfahren nach Anspruch 29 oder 30, bei welchem nach Unterbrechung einer physikalischen Datenverbindung, deren zugehörige logische Datenverbindung noch besteht, für diese logische Datenverbindung automatisch erneut eine physikalische Datenverbindung aufgebaut wird.

**32.** Verfahren nach Anspruch 31, bei welchem im Falle einer physikalischen Datenverbindung über ein Telefonmodem diesem die Telefonnummer eines für die logische Datenverbindung empfängerseitig vorliegenden Client- oder Serverrechners übertragen wird.

**33.** Verfahren nach einem der Ansprüche 28 bis 32, welches ferner die Verfahrensschritte des Verfahrens gemäß einem der Ansprüche 20 bis 27 umfaßt.

**34.** Verfahren nach Anspruch 33, bei welchem nach einer Unterbrechung der physikalischen Datenverbindung nur solche Datenpakete (15) übertragen werden, die noch nicht als fehlerfrei empfangen bestätigt waren.

**35.** Verfahren nach Anspruch 33 oder 34, bei welchem für eine bestehende logische Datenverbindung die physikalische Datenverbindung bei schlechter Übertragungsqualität automatisch abgebrochen und eine neue physikalische Datenverbindung aufgebaut wird.

**36.** Computerprogrammprodukt, welches Befehlscode-Abschnitte umfaßt, durch die die Durchführung des Verfahrens gemäß einem der Ansprüche 20 bis 35 veranlaßt wird, wenn das Computerprogramm auf einem Endgerät (3, 4), insbesondere einem Computer läuft.

**37.** Computerprogrammprodukt nach Anspruch 36, welches Befehlscodeabschnitte umfaßt, die Funktionsaufrufe einer TCP/IP Socket Schnittstelle derart abbilden, daß das Verfahren gemäß einem der Ansprüche 20 bis 35 durchgeführt wird.

Fig. 1

Fig. 2

Fig. 3

Fig. 4

Fig. 5

Fig. 6

Flow
Stopped

Stopped

FlowStart
PDU

Fig.7

Fig.8

15

| | | | | 2+n | 2+n+4 |
|---|---|---|---|---|---|
| STX | Typ | data of length n | | checksum | ETX |

0    1    2                                          2+n        2+n+4

Fig. 9

| Typ | Bit 7 | Bit 6 | Bit 5 | Bit 4 | Bit 3 | Bit 2 | Bit 1 | Bit 0 |
|---|---|---|---|---|---|---|---|---|
| DATA | 0 | 0 | P-Bit | M-Bit | window number | | | |
| ACK | 1 | 0 | 0 | 0 | window number | | | |
| NAK | 1 | 0 | 1 | E-Bit | window number | | | |
| INIT | 1 | 1 | 0 | 0 | window number | | | |

Fig. 10

| Version | dial | Window-size | Escape group | Block length | Timer T1 | Timer T2 | Timer T3 | Retry Count |
|---|---|---|---|---|---|---|---|---|

0       1       2       3       4       6       8       10      12

Fig. 11

24